(19) Europäisches Patentamt
European Patent Office
Office européen des brevets

(11) **EP 4 203 227 A1**

(12) **DEMANDE DE BREVET EUROPEEN**

(43) Date de publication:
**28.06.2023 Bulletin 2023/26**

(21) Numéro de dépôt: **22216647.2**

(22) Date de dépôt: **23.12.2022**

(51) Classification Internationale des Brevets (IPC):
**H02J 3/32** (2006.01)    **H02J 3/38** (2006.01)
**H02J 3/46** (2006.01)

(52) Classification Coopérative des Brevets (CPC):
**H02J 3/32; H02J 3/38; H02J 3/46**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité:  **24.12.2021  FR 2114493**

(71) Demandeur: **Commissariat à l'énergie atomique et aux énergies alternatives**
**75015 Paris (FR)**

(72) Inventeurs:
• **PAÏS, Grégory**
  **38054 GRENOBLE (FR)**
• **DELAPLAGNE, Tony**
  **38054 GRENOBLE (FR)**
• **VINIT, Laurent**
  **38054 GRENOBLE (FR)**

(74) Mandataire: **INNOV-GROUP**
  **310, avenue Berthelot**
  **69372 Lyon Cedex 08 (FR)**

(54) **PROCÉDÉ DE COMMANDE D'UNE PUISSANCE FOURNIE A UN RÉSEAU ÉLECTRIQUE, METTANT EN OEUVRE UN MODÈLE DE CENTRALE**

(57)    Procédé de commande d'une puissance fournie à un réseau électrique (3) présentant une fréquence nominale, par un groupe de production électrique comportant une centrale hydroélectrique (1) et un système de stockage d'énergie à batteries (2), ce procédé comportant une étape de détermination, à partir d'un modèle de la centrale hydroélectrique, d'une puissance théorique de stabilisation de la fréquence du réseau électrique par la centrale hydroélectrique, cette puissance théorique de stabilisation étant relative à la production de la seule centrale hydroélectrique (1) en vue d'une stabilisation de la fréquence du réseau électrique (3), lorsque des consignes (11) pour des organes de production (5, 6) de la centrale hydroélectrique (1) sont mises en oeuvre.

Fig. 1

**Description**

DOMAINE TECHNIQUE

L'invention concerne le domaine de la production d'énergie électrique et de la gestion des réseaux de distribution d'énergie électrique.

Elle concerne plus particulièrement les stratégies mises en oeuvre au sein des centrales de production électrique pour maintenir la stabilité en fréquence des réseaux électriques.

ART ANTÉRIEUR

Dans la gestion de réseaux électriques, il existe plusieurs mécanismes, généralement normalisés, qui permettent à tout instant le maintien de l'équilibre entre la consommation et la production d'énergie électrique. Ces mécanismes permettent de stabiliser les caractéristiques électriques du réseau au niveau local, national, ou à plus large échelle.

Par exemple, il existe en Europe un premier mécanisme dénommé « FCR » (pour Frequency Containment Reserve, en anglais) ou « réglage primaire de fréquence », qui permet de moduler la puissance produite par les groupes de production électrique en fonction de la déviation de la fréquence du réseau électrique. Cette déviation traduit en effet un déséquilibre entre production et consommation. De nombreuses solutions spécifiques sont implémentées au niveau des groupes de productions électriques et permettent de répondre plus ou moins rapidement aux sollicitations en fréquence.

Les réserves de stabilisation de la fréquence réagissent automatiquement pour compenser les déviations de fréquence et stabiliser la fréquence à une valeur stationnaire. La principale exigence technique pour le réglage primaire de fréquence est une réaction automatique et proportionnelle aux écarts de fréquence dans un délai de quelques secondes.

Par ailleurs, les réseaux électriques évoluent vers une hybridation des centrales de production électrique traditionnelles avec des systèmes de stockage (batteries, volants d'inertie, etc). Cette hybridation permet d'améliorer les performances globales du système.

Avec la tendance à l'augmentation de la part des énergies renouvelables dans le bouquet énergétique, les événements de fluctuation du réseau deviennent difficiles à anticiper compte tenu des aspects météorologiques locaux aux centrales de production solaire ou éolien.

La demande de brevet EP2721710 décrit un groupe de production électrique comportant une centrale de production électrique et un système de stockage d'énergie à batteries dont la fonction est d'assister la centrale de production électrique dans le maintien de la fréquence nominale du réseau électrique.

EXPOSÉ DE L'INVENTION

L'invention a pour but d'améliorer les stratégies de gestion des groupes de production électrique de l'art antérieur, dans le cadre du maintien de la stabilité en fréquence du réseau.

À cet effet, l'invention vise un procédé de commande d'une puissance fournie à un réseau électrique présentant une fréquence nominale, par un groupe de production électrique comportant une centrale hydroélectrique et un système de stockage d'énergie à batteries, ce procédé comportant des étapes :

- d'acquisition d'un premier signal représentatif de la puissance à fournir au réseau électrique ;
- d'acquisition d'un deuxième signal représentatif de l'état de charge du système de stockage d'énergie à batteries ;
- de commande de la centrale hydroélectrique et de commande du système de stockage d'énergie à batteries, de sorte à fournir une puissance au réseau électrique en fonction du premier signal et du deuxième signal.

Ce procédé comporte de plus les étapes suivantes :

- filtrage du premier signal pour en extraire une composante basse fréquence dont la fréquence est inférieure à un seuil prédéterminé ;
- production de consignes pour des organes de production de la centrale hydroélectrique, à partir de ladite composante basse fréquence ;

- détermination, à partir d'un modèle de la centrale hydroélectrique, d'une puissance théorique de stabilisation de la fréquence du réseau électrique par la centrale hydroélectrique, cette puissance théorique de stabilisation étant relative à la production de la seule centrale hydroélectrique en vue d'une stabilisation de la fréquence du réseau électrique, lorsque lesdites consignes pour des organes de production de la centrale hydroélectrique sont mises en oeuvre ;
- détermination, à partir du premier signal, d'une puissance totale attendue de stabilisation de la fréquence du réseau électrique ;
- production d'une consigne de puissance pour le système de stockage d'énergie à batteries, à partir de la différence entre ladite puissance totale attendue de stabilisation de la fréquence du réseau électrique et ladite puissance théorique de stabilisation.

Les étapes décrites ne sont pas exécutées nécessairement dans l'ordre indiqué. Notamment, certaines peuvent être exécutées simultanément.

L'invention permet une mise en oeuvre efficiente de tout mécanisme de régulation auquel un producteur d'énergie électrique est astreint, qui exige un retour à la fréquence nominale du réseau électrique, en un temps déterminé, en vue de participer à son échelle à l'équilibrage entre la fourniture et la consommation de puissance électrique sur le réseau.

L'invention permet de réaliser ces fonctions classiques avec une sollicitation moindre des actionneurs, des organes mécaniques, ou d'autres éléments physiques, dont la centrale de production électrique est pourvue et dont la commande permet de moduler la puissance que la centrale fournit au réseau.

Ces éléments physiques de la centrale sont susceptibles d'usure, nécessitent de la maintenance, et présentent un coup énergétique d'actionnement. Le système de stockage d'énergie à batteries est exploité au mieux pour ménager ces éléments physiques, en prenant en charge les variations rapides et franches de la puissance à produire. L'utilisation d'un système de stockage d'énergie à batteries présente les mêmes avantages que ceux connus de l'art antérieur, notamment le fait que la réponse de tels systèmes de stockage est de l'ordre de une seconde, et qu'ils sont ainsi très efficients pour gérer les variations rapides de fréquence nominale, nécessitant une augmentation ou une baisse rapide de la puissance fournie au réseau électrique. L'invention permet de bénéficier de ces avantages en pilotant le système de stockage d'énergie à batteries sur l'ensemble de sa plage de fonctionnement, tout en réduisant sa dégradation, et ce en ménageant la centrale de production électrique. Le pilotage de la centrale de production électrique optimise l'utilisation des organes électromécaniques et contribue à la diminution de la fatigue et du vieillissement mécanique.

L'invention est particulièrement adaptée dans le domaine du soutien et de la participation des unités de productions d'origine renouvelable à la stabilité du réseau électrique. Notamment, les centrales hydroélectriques bénéficient actuellement de certaines dérogations permettant de ne pas participer au réglage primaire de fréquence, ou d'y participer avec des temps de réponse aménagés. Ces dérogations sont vouées à disparaître, et l'invention permet notamment l'hybridation de ces centrales de production électriques de manière efficiente, peu coûteuse, et peu intrusive.

Le procédé selon l'invention peut comporter les caractéristiques additionnelles suivantes, seules ou en combinaison :

- ledit modèle de la centrale hydroélectrique comporte au moins une pluralité de consignes de puissance mises en rapport avec le temps de réponse correspondant, nécessaire à la centrale hydroélectrique pour atteindre la puissance correspondant à la consigne ;

- ledit modèle de la centrale hydroélectrique est conforme à une équation mettant en relation ladite puissance théorique de stabilisation avec : un signal représentatif de la production de consignes pour des organes de production de la centrale hydroélectrique ; un gain relatif au rapport entre la puissance produite par la centrale hydroélectrique et la puissance totale attendue de stabilisation de la fréquence du réseau électrique ; et une constante de temps de réponse en puissance, relative à la centrale hydroélectrique ;

- à l'étape de détermination de ladite puissance théorique de stabilisation, ledit modèle de la centrale hydroélectrique est appliqué au moins à ladite composante basse fréquence ;

- ledit modèle de la centrale hydroélectrique est appliqué au moins à une combinaison de ladite composante basse fréquence et d'un signal relatif à la gestion de charge du système de stockage d'énergie à batteries ;

- le signal relatif à la gestion de charge du système de stockage d'énergie à batteries est relatif à un paramètre d'état de charge cible du système de stockage d'énergie à batteries ;

- le premier signal est la fréquence du réseau électrique ;

- l'étape de filtrage comporte une opération de détermination de la différence entre la fréquence du réseau électrique et sa fréquence nominale ;

- à l'étape de filtrage, c'est un signal constitué de l'acquisition en continu de ladite différence entre la fréquence du réseau électrique et sa fréquence nominale, qui est filtré pour en extraire la composante basse fréquence ;

- ledit modèle de la centrale hydroélectrique est appliqué à un signal combinant au moins la valeur de la fréquence nominale du réseau électrique à ladite composante basse fréquence ;

- l'étape de filtrage est réalisée par un filtre passe bas du premier ordre ;

- l'étape de filtrage est réalisée par un filtre passe bas dont la fréquence de coupure correspond audit seuil prédéterminé de fréquence ;

- le filtre passe bas présente un gain sensiblement égal à 1 ;

- le filtre passe bas présente une constante de temps correspondant environ à un tiers de la constante de temps de la centrale hydroélectrique ;

- la puissance totale attendue de stabilisation de la fréquence du réseau électrique est déterminée par un coefficient contractuel $K_{FCR}$ multiplié par la différence entre la fréquence du réseau électrique et sa fréquence nominale ;

- l'acquisition du premier signal est réalisée par un contrôleur d'hybridation comportant une entrée d'acquisition d'un signal représentatif de la puissance à fournir au réseau électrique ;

- le procédé comporte les étapes suivantes : détermination, par le contrôleur d'hybridation, de la puissance relative d'une part à la centrale hydroélectrique, et d'autre part au système de stockage d'énergie à batteries ; production, par le contrôleur d'hybridation, d'une consigne de puissance pour le système de stockage d'énergie à batteries ; production, par le contrôleur d'hybridation, d'un signal de substitution représentatif de la puissance à fournir par la seule centrale hydroélectrique ; acquisition, par un contrôleur de centrale comportant une entrée d'acquisition d'un signal représentatif de la puissance à fournir par la centrale hydroélectrique, dudit signal de substitution ; production, par le contrôleur de centrale, de consignes pour des organes de production de la centrale hydroélectrique ;

- le premier signal et le signal de substitution sont de même nature ;

- le premier signal est la fréquence du réseau électrique et le signal de substitution est une fréquence de réseau électrique fictive ;

- le signal de substitution est produit au moins à partir de ladite composante basse fréquence ;

- l'étape de filtrage comporte une opération de détermination de la différence entre la fréquence du réseau électrique et sa fréquence nominale ;

- la valeur de la fréquence nominale du réseau électrique est combinée à ladite composante basse fréquence pour produire le signal de substitution ;

- le procédé comporte une étape de production, par le contrôleur d'hybridation, d'un signal relatif à la gestion de charge du système de stockage d'énergie à batteries, ledit signal étant combiné à ladite composante basse fréquence, pour produire le signal de substitution ;

- le signal relatif à la gestion de charge du système de stockage d'énergie à batteries est relatif à un paramètre d'état de charge cible du système de stockage d'énergie à batterie ;

- à l'étape de production d'une consigne de puissance pour le système de stockage d'énergie à batteries, le contrôleur d'hybridation détermine la puissance de stabilisation de la fréquence électrique correspondant au signal de substitution ;

- à l'étape de production d'une consigne de puissance pour le système de stockage d'énergie à batteries, le contrôleur d'hybridation détermine, à partir du premier signal, une puissance totale attendue de stabilisation de la fréquence du réseau électrique ;

- la consigne de puissance pour le système de stockage d'énergie à batteries est produite à partir de la différence entre ladite puissance totale attendue de stabilisation de la fréquence du réseau électrique et ladite la puissance de stabilisation de la fréquence électrique correspondant au signal de substitution ;

- le procédé comporte un mode de désactivation du système de stockage d'énergie à batteries dans lequel le contrôleur d'hybridation produit un signal de substitution qui reproduit le premier signal.

PRÉSENTATION DES FIGURES

D'autres caractéristiques et avantages de l'invention ressortiront de la description non limitative qui suit, en référence aux dessins annexés dans lesquels :

- la figure 1 est une représentation schématique d'un groupe de production électrique hybride, et du réseau électrique associé ;

- la figure 2 est un schéma-blocs illustrant le contrôleur d'hybridation de la figure 1 ;

- la figure 3 est un bloc diagramme illustrant le procédé selon l'invention.

Les éléments similaires et communs aux divers modes de réalisation portent les mêmes numéros de renvoi aux figures.

DESCRIPTION DÉTAILLÉE

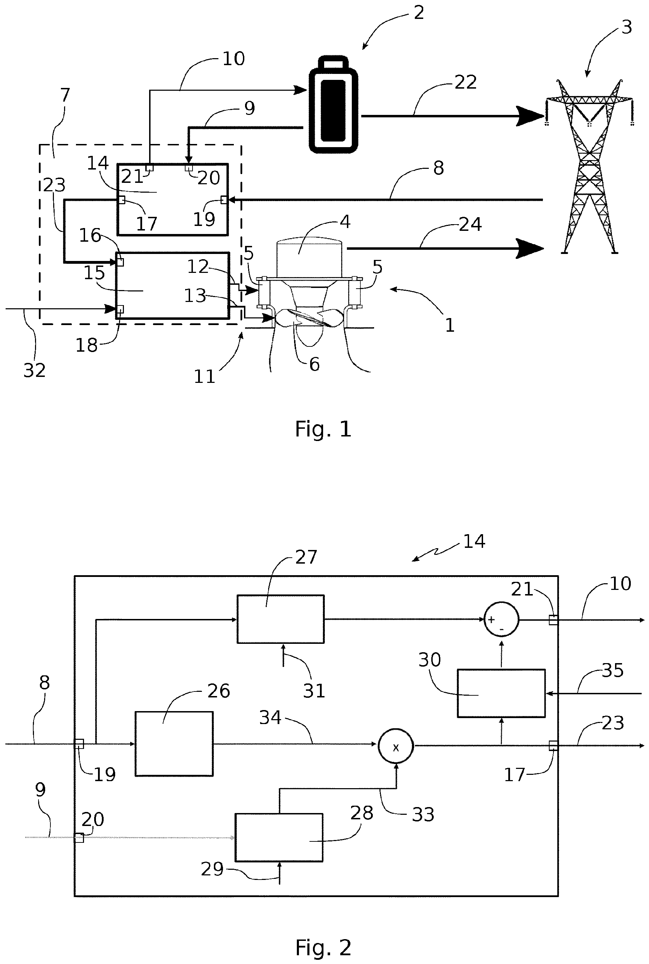

La figure 1 est une vue schématique illustrant un groupe de production électrique hybride comportant une centrale de production électrique 1 et un système de stockage d'énergie à batteries 2.

Ces moyens de production fournissent au réseau électrique 3 (schématisé par un pylône haute tension sur la figure 1) une puissance électrique. Le réseau électrique 3 présente une fréquence nominale (par exemple 50 Hz en Europe).

Le groupe de production électrique est non seulement adapté à fournir une puissance au réseau électrique, mais est de plus dimensionné pour participer à l'équilibrage en fréquence du réseau. Dans cet exemple, le groupe de production électrique participe en continu au réglage primaire de fréquence, avec un délai paramétrable (qui est par exemple de 30 s sur le réseau électrique français) pour fournir une puissance ajustée pour un équilibrage de fréquence, dès lors qu'un déséquilibre en fréquence apparaît.

Dans cet exemple, la centrale de production électrique 1 est une centrale hydroélectrique schématisée par une turbine 4. La centrale de production électrique 1 comporte des moyens physiques sur lesquels il est possible d'agir pour faire varier la puissance qu'elle produit. Dans cet exemple, la figure 1 schématise des vannes 5 adaptées à piloter le débit d'eau alimentant la turbine 4, et des actionneurs 6 adaptés à piloter l'inclinaison des pales de la turbine 4. L'action sur les vannes 5 et les actionneurs 6, suite à une consigne donnée, permet de piloter la puissance que la centrale 1 fournit au réseau électrique 3.

Le système de stockage d'énergie à batteries 2 est constitué de tout moyen de stockage d'énergie électrique connu et adapté à cette application, par exemple un conteneur de batteries lithium-ion. Le système de stockage 2 est également adapté à délivrer ou consommer, sur consigne, une puissance sur le réseau électrique 3.

Le groupe de production électrique comporte des moyens de commande 7 qui sont physiquement constitués de manière classique par des éléments électroniques analogiques et/ou numériques, du matériel informatique programmé à cet effet, etc.

Ces moyens de commande 7 sont adaptés à recevoir :

- un signal 8 représentatif de la puissance à fournir au réseau électrique ;
- un signal 9 représentatif de l'état de charge du système de stockage 2.

Les moyens de commande 7 sont de plus adaptés à fournir :

- une consigne 10 de puissance pour le système de stockage 2 ;
- des consignes 11 pour des organes de production 5, 6 de la centrale 1. Les consignes 11 peuvent comporter un certain nombre de consignes, chacune destinée à un organe physique précis de la centrale 1, agissant sur la puissance fournie.

Dans le présent exemple, les consignes 11 comportent une consigne 12 de réglage (degré d'ouverture) des vannes 5 et une consigne 13 de réglage des actionneurs de pales de turbine (réglage du pas de la turbine). En variante, les consignes 11 peuvent comporter toute consigne dirigée vers d'autres organes physiques de la centrale 1 qui participent à la modulation de la puissance.

Les moyens de commande 7 comportent un contrôleur d'hybridation 14 et un contrôleur de centrale 15.

Le contrôleur de centrale 15 est un contrôleur classique utilisé couramment dans les centrales de production électrique. Il comporte une entrée 16 d'un signal représentatif de la puissance à fournir au réseau électrique et comporte des sorties permettant de délivrer les consignes 11 de pilotage de la centrale. Le positionnement classique d'un tel contrôleur de centrale 15 est d'être connecté au réseau électrique par son entrée d'acquisition 16 en vue de piloter uniquement la puissance fournie par la centrale de production électrique. Selon cette utilisation classique, le contrôleur de centrale 15 détermine la puissance à fournir au réseau électrique directement et uniquement par la centrale, et produit les consignes 11 en conséquence. Un tel contrôleur de centrale 15 est bien connu, et est basé généralement sur un régulateur PID, ou tout autre système de contrôle et asservissement.

Dans le cadre de l'invention, le contrôleur de centrale 15 est positionné différemment. L'entrée d'acquisition 16 n'est pas connectée au réseau électrique 3 mais est connectée à une sortie 17 de commande de centrale dont dispose le contrôleur d'hybridation 14.

Le contrôleur d'hybridation 14 va produire par sa sortie 17 un signal 23 dit « signal de substitution » qui est représentatif de la puissance à fournir par la seule centrale 1 (c'est-à-dire sans le dispositif de stockage d'énergie 2). Cette puissance va être fournie par la centrale au point de raccordement avec le réseau électrique. Cette puissance va donc être fournie au réseau électrique et/ou au système de stockage 2 (notamment lorsque ce dernier est en charge).

Le signal de substitution 23 produit par le contrôleur d'hybridation 14 à sa sortie 17 est fourni au contrôleur de centrale 15 qui agira sur la puissance produite par la centrale 1, en fonction de ce signal de substitution 23. Le signal de substitution 23 aura préalablement été mis en forme par le contrôleur d'hybridation 14 pour les besoins de l'hybridation, et notamment en tenant compte de la gestion du système de stockage d'énergie 2. Le contrôleur de centrale 15 est quant à lui seulement relié par son entrée d'acquisition 16 au contrôleur d'hybridation 14 qui lui fournit le signal de substitution 23.

Le contrôleur de centrale 15 reçoit donc sur son entrée 16, entrée qui est destinée normalement à un signal représentatif de la puissance à fournir au réseau électrique, un signal de substitution 23 qui est représentatif de la puissance que la centrale 1 doit fournir, mais pas uniquement au réseau électrique 3.

Le contrôleur d'hybridation 14 comporte une entrée 19 d'acquisition d'un signal représentatif de la puissance à fournir au réseau électrique, laquelle est effectivement branchée au réseau électrique, et sur laquelle parvient effectivement le signal 8 représentatif de la puissance à fournir au réseau électrique.

Ce signal 8 est représentatif de l'ensemble de la puissance à fournir au réseau électrique 3 par tout le groupe de production électrique (centrale 1 et système de stockage 2).

Dans le présent exemple, le signal 8 représentatif de la puissance à fournir au réseau électrique est une mesure directe de la fréquence du réseau électrique 3. Ainsi, ce signal 8 apporte la connaissance de la fréquence du réseau électrique à chaque instant et permet de déterminer l'écart entre la fréquence réelle et la fréquence nominale. Ce signal 8 est ainsi directement représentatif de la puissance à injecter sur le réseau, en comportant une part de puissance dédiée au réglage primaire pour l'équilibrage en fréquence.

En variante, le signal représentatif de la puissance à fournir au réseau électrique, peut être tout autre signal employé dans le domaine, par exemple une consigne du gestionnaire de réseau électrique indiquant directement au groupe de production électrique la puissance instantanée qu'il doit fournir.

Dans cet exemple, le contrôleur d'hybridation 14 procède, sur son entrée d'acquisition 19, à une mesure en continu de la fréquence du réseau électrique, avec une précision adéquate (par exemple avec une précision de l'ordre du mHz).

Le contrôleur d'hybridation 14 comporte également une entrée 20 d'acquisition du signal 9 représentatif de l'état de charge du système de stockage 2. Le signal 9 peut être un classique signal SOC (pour State Of Charge, en anglais), indiquant le pourcentage de charge du système de stockage 2.

En plus de cette entrée 20, le contrôleur d'hybridation 14 peut comporter toute autre entrée fournissant des données utiles pour la gestion classique du système de stockage 2. Par exemple : des alarmes batterie, les tensions et courants alternatifs et continus, les puissances en jeu, etc., pour permettre l'affichage, la commande, et la surveillance du système de stockage 2.

Le contrôleur d'hybridation 14 comporte de plus une sortie 21 délivrant la consigne 10 de puissance pour le système de stockage 2. Cette consigne 10 est par exemple une consigne numérique selon un protocole réseau adapté, ou analogique, telle qu'une boucle de courant.

Le contrôleur d'hybridation 14 commande ainsi :

- directement le système de stockage 2 qui délivre, ou consomme, une puissance 22 sur le réseau électrique 3 ; et
- la centrale 1 de manière indirecte en fournissant au contrôleur de centrale 15 un signal de substitution 23 de sorte que la centrale 1 fournisse au réseau électrique 3 une puissance 24. Cette puissance 24 est fournie au même point de raccordement au réseau électrique que la puissance 22, de sorte que la puissance 24 peut permettre de recharger le système de stockage 2.

Chacune des sources d'énergie (centrale 1 et système de stockage 2) produit la puissance électrique en fonction de ses consignes. Pour le système de stockage 2, la consigne calculée par le contrôleur d'hybridation 14 vient compléter la puissance fournie par la centrale 1 afin d'obtenir une puissance globale injectée sur le réseau $P_{FCR}$ en lien avec la déviation de fréquence.

Généralement, les producteurs qui participent au réglage primaire de fréquence produisent une puissance nominale (liée à une consigne nominale) qui est ensuite modulée en fonction de la déviation de fréquence. Sur les installations hydroélectriques cette consigne nominale peut être une consigne de puissance à produire ou bien une consigne de débit d'eau à turbiner. En effet sur les barrages du type « au cours de l'eau » équipés de turbines Kaplan, l'objectif peut être la régulation des niveaux d'eau en amont et en aval de l'installation, afin d'assurer la navigabilité du fleuve. Pour répondre à cet objectif la centrale de production électrique peut être pilotée suivant une consigne nominale 32 de type débit d'eau à turbiner, reçue sur une entrée 18 du contrôleur de centrale 15.

La puissance produite vue du réseau électrique est donc la somme algébrique des puissances produites par la centrale et par le système de stockage de batteries :

$$P_{Grid} = P_{HPP} + P_{BESS} \qquad (\text{équation 1})$$

avec :

- $P_{Grid}$ : Puissance fournie au réseau électrique ;
- $P_{HPP}$ : Puissance fournie par la centrale ;
- $P_{BESS}$ : Puissance fournie ou consommée par de système de stockage.

Cependant, dans le réglage primaire de fréquence, la puissance relative à ce réglage est seulement la part de puissance qui est liée à la déviation de fréquence. Cette puissance est la somme de la puissance produite par la centrale, et liée seulement à la déviation de fréquence, et de la puissance fournie ou consommée par le système de stockage (le système de stockage n'est ici utilisé que pour le réglage primaire de fréquence) :

$$P_{FCR} = P_{HPP/FCR} + P_{BESS} \qquad (\text{équation 2})$$

avec :

- $P_{FCR}$: Puissance de réglage primaire de puissance (puissance totale destinée à compenser la déviation de fréquence) ;
- $P_{HPP/FCR}$ : Puissance fournie par la centrale liée seulement à la déviation de fréquence ;
- $P_{BESS}$ : Puissance fournie ou consommée par de système de stockage.

Cette puissance de réglage primaire de fréquence $P_{FCR}$ est généralement contractualisée entre le gestionnaire du réseau électrique et le producteur d'énergie. Un coefficient ($K_{FCR}$) est fixé et contractualisé entre les deux parties :

$$P_{FCR} = K_{FCR} * \Delta F \qquad \text{(équation 3)}$$

avec :

- $P_{FCR}$ : Puissance de réglage primaire de puissance ;
- $K_{FCR}$ : Coefficient contractuel ;
- $\Delta F$ : Différence entre la fréquence nominale et la fréquence du réseau à l'instant t.

La commande des deux sources de production (centrale 1 et système de stockage 2) est réalisée afin de satisfaire les équations (1), (2), et (3) à chaque instant.

La figure 2 est un schéma-blocs des éléments de fonctionnement du contrôleur d'hybridation 14.

Le signal 8 (ici la fréquence du réseau) passe à travers un bloc de filtrage 26 qui permet, grâce à un filtre passe bas, de ne garder que l'évolution lente de la fréquence. Le signal 8 est ainsi filtré pour en extraire une composante basse fréquence 34 dont la fréquence est inférieure à un seuil prédéterminé. Ce filtre peut être du type filtre passe bas du premier ordre avec une fréquence de coupure correspondant audit seuil prédéterminé de fréquence, et dont la constante de temps est à adapter en fonction du temps de réponse souhaité pour le groupe de production électrique, suite à un déséquilibre de fréquence du réseau.

Un bon compromis est de choisir une constante de temps du filtre passe bas correspondant à 1/3 de la constante de temps de la centrale 1, soit par exemple 30 s lorsque la constante de temps d'une centrale hydroélectrique est de l'ordre de 100 s. Le signal obtenu par le bloc 26 est ensuite modulé en fonction du niveau de charge du système de stockage 2, pour produire le signal de substitution 23 sur la sortie 17.

Le signal de substitution 23 est de même nature que le signal 8. Dans ce cas, le signal de substitution 23 est donc une fréquence de réseau électrique. Cependant, il ne s'agit pas d'une fréquence de réseau électrique réelle, mais d'une fréquence fictive à laquelle il est souhaitable que la production de puissance par la centrale 2 réponde, par l'intermédiaire du contrôleur de centrale 15, pour que la centrale fournisse la puissance calculée dans le cadre de l'hybridation, pour prendre notamment en compte la charge des moyens de stockage 2.

Le signal de substitution 23 est produit au moins à partir de la composante basse fréquence 34 (de la puissance dédiée au réglage en fréquence). Dans cet exemple, le signal de substitution 23 est produit à partir de la combinaison de la composante basse fréquence 34 avec le signal 33 de gestion de charge issu du bloc 28 (gestion de la charge batterie).

Le signal 8 passe également à travers un deuxième bloc 27 qui calcule, à l'instant t, la puissance totale attendue par le gestionnaire de réseau, pour la stabilisation de la fréquence du réseau, compte tenu de la déviation de fréquence (voir équation 3). Le bloc 27 comporte un paramètre 31 correspondant au coefficient contractuel $K_{FCR}$.

La consigne 10 de puissance envoyée au dispositif de stockage 2 est la différence entre ladite puissance totale attendue de stabilisation de la fréquence du réseau électrique, et la puissance produite par la centrale 2 (voir équation 2).

Le bloc 30 permet de déterminer la puissance produite par la centrale, cette puissance qui est relative aux consignes envoyées à la centrale 1. Cette puissance produite est, dans le présent exemple, relative au signal de substitution 23 envoyé au contrôleur de centrale 15. Le bloc 30 utilise un modèle simplifié du comportement de la centrale 1. Ce modèle peut être un modèle analogique ou numérique, qui pourra être obtenu facilement à partir de calibrages physiques sur la centrale 1, ou par simulation numérique, avec des outils classiques, ou d'identification automatique, à la portée de l'homme du métier. Un modèle peut également être obtenu à partir de mesures physiques réalisées sur la centrale suivant une campagne de mesure, voire un plan d'expérience, avec la production de consignes et les mesures correspondantes du temps de réponse de la puissance produite, des gains, etc. Un modèle formé en temps réel, au cours du temps, selon des principes d'apprentissage automatique, est également envisageable.

Le modèle comporte au moins une pluralité de consignes de puissance mises en rapport avec le temps de réponse correspondant, nécessaire à la centrale de production électrique pour atteindre la puissance correspondant à la consigne.

Le modèle est en lien avec la complexité de la réponse de la centrale. Il est de préférence simplifié compte tenu des tolérances qu'accorde le gestionnaire de réseau sur la réponse en puissance. En effet, les gestionnaires de réseaux électriques, ou la réglementation, accordent une erreur à la baisse entre la puissance produite et la puissance attendue (de l'ordre de 20 %, par exemple). Ainsi un modèle du premier ordre avec une constante de temps fixe conviendra. Dans le cas de systèmes non linéaires, une table de correspondance (« look up table », en anglais) peut également être utilisée pour traduire les différentes puissances produites en fonction des conditions de fonctionnement des machines de la centrale 1. Ces conditions de fonctionnement peuvent être portées au modèle par un signal de fonctionnement 35. Ce signal de fonctionnement 35 peut être, par exemple, relatif aux niveaux d'eau amont et/ou aval de la centrale 1, et/ou à une consigne de production envoyée par le gestionnaire du réseau électrique.

Le bloc 30 correspond ainsi à la détermination, à partir du modèle de la centrale 1, d'une puissance théorique de stabilisation de la fréquence du réseau électrique par la centrale 1 seule. Cette puissance théorique est relative à la production de la seule centrale de production électrique en vue d'une stabilisation de la fréquence du réseau électrique 3, et ce lorsque les consignes 11 pour des organes de production 5, 6 de la centrale 1 sont mises en oeuvre.

Le modèle de la centrale 1 peut, à titre principal ou en complément, être conforme à une équation mettant en relation la puissance théorique de stabilisation avec : un signal représentatif de la production des consignes 11 pour des organes de production 5, 6 de la centrale de production électrique 1 (ce signal représentatif étant, dans cet exemple, la consigne de fréquence vue par le contrôleur de centrale 15) ; un gain relatif au rapport entre la puissance produite par la centrale 1 et la puissance totale attendue de stabilisation de la fréquence du réseau électrique ; et une constante de temps de réponse en puissance, relative à la centrale de production électrique 1.

Par exemple, le modèle de la centrale 1 peut être donné sous la forme de l'équation de Laplace suivante :

$$\frac{\widehat{P\,HPP_{FCR}(p)}}{\big(50 - F(p)\big)} = \frac{K_{FCR}}{1 + \tau_{hyd}\,p}$$

avec :

$\widehat{P\,HPP_{FCR}(p)}$ : L'estimation de la puissance produite par la centrale liée seulement à la déviation de fréquence (en MW) ;

$F(p)$ : La consigne en fréquence vue par le contrôleur 15 de la centrale 1 (signal 23 en Hz), en considérant une fréquence nominale de 50 Hz ;

$K_{FCR}$ : Le gain statique entre la puissance produite et la déviation de fréquence (en MW/Hz) ; et

$\tau_{hyd}\,p$ : La constante de temps de la réponse en puissance, identifiée sur la centrale (en secondes).

Ce modèle, qui peut donc notamment être basé sur un modèle du premier ordre, permet d'obtenir facilement la composante de la puissance produite par la centrale 1, qui est liée à la commande en fréquence, c'est-à-dire à la commande qui a pour but de contribuer à l'équilibrage en fréquence du réseau. En effet la puissance produite par la centrale 1 a deux composantes :

- une composante majoritaire liée au réglage en puissance ou au débit turbiné qui représente plus de 90 % de la puissance produite ;
- une composante minoritaire liée à la compensation de la déviation de fréquence, et qui représente moins de 10 % de la puissance produite.

Le modèle permet d'extraire facilement ces composantes depuis le signal de substitution 23, sans recourir à des techniques de filtrages délicates et qui manquent de robustesse, compte tenu du fait que le signal de mesure de la puissance est généralement fortement perturbé et bruité. Il apparaît que, notamment sur les installations hydrauliques, les variations de débit induites par la commande en fréquence génèrent des ondes de chocs et de pressions qui par écho génèrent de nouvelles variations de puissance en plus de celles recherchées par le réglage primaire de fréquence.

L'utilisation d'un modèle de la centrale 1 est ainsi particulièrement adapté pour une centrale hydroélectrique hybride, et pallie à la difficulté de mesures instantanées fiables de la réponse mécanique/électrique à des variations de sollicitation sur ces installations.

Le bloc 28 concourt à la production du signal de substitution 23, et est responsable de la modulation de ce signal pour intégrer les problématiques de gestion de la charge et décharge du système de stockage, dans la production de puissance de la centrale 1, et ce de manière transparente pour cette dernière dont le contrôleur de centrale 15 ne fait que répondre de manière classique à un signal de même nature que le signal représentatif de la puissance à produire (le signal reconstitué 23). Le système de stockage 2 n'est en effet rechargé que par la centrale 1.

Le bloc 28 permet de moduler la puissance produite par la centrale 1 en fonction du niveau de charge du système de stockage 2. Le bloc 28 peut être un bloc mettant en oeuvre des algorithmes classiques dans la gestion de batteries, dans lesquels des batteries sont rechargées sur des moments de production de puissance, et fournissent de la puissance sur d'autres moments.

Fonctionnellement, le bloc 28 permet, lorsque le système de stockage est déchargé et lorsque la centrale 1 produit plus de puissance que demandé (par exemple lorsque la fréquence du réseau est au-dessus de 50 Hz et qu'elle est en train de diminuer), de laisser la consigne de production de puissance de la centrale 1 à son point de fonctionnement et d'utiliser ce surplus d'énergie (vis-à-vis de la puissance totale attendue de stabilisation de la fréquence du réseau électrique) pour recharger les batteries du système de stockage 2.

De préférence, plus l'état de charge du dispositif de stockage 2 est éloigné de son point de charge optimum, moins la centrale 2 revient vite au point de fonctionnement dicté par le signal 8 et plus le surplus d'énergie produite permet de recharger les batteries du dispositif de stockage.

Le point de charge optimum peut être fixé pour le dispositif de stockage par un paramètre « état de charge cible » 29 qui est fourni au bloc 28. Le paramètre 29 est de préférence fixé aux alentours de 50 % et permet de faire fonctionner le système de stockage dans une zone optimale pour ses batteries, tant sur le plan des performances (acceptation de puissances positives et négatives importantes), que sur le plan de la réduction des dégradations et optimisation de sa durée de vie (la durée de vie calendaire de batteries maintenues à 50 % de leur charge maximale est optimale).

De préférence, le déphasage entre le signal de substitution 23 et le signal 8 provenant du réseau électrique est piloté par l'écart de niveau de charge des batteries. Cela permet une gestion optimum des moments de recharge du système de stockage. De plus, cette stratégie de rechargement se fait sans perturber le réseau électrique (la puissance produite vaut toujours celle attendue par le gestionnaire de réseau et elle n'est jamais consommée depuis celui-ci) et sans augmenter significativement la puissance produite par la centrale 1.

Le bloc 28 produit ainsi un signal 33 de gestion de charge, relatif à la gestion du système de stockage 2 qui sera combiné avec la composante basse fréquence 34 pour produire le signal de substitution 23.

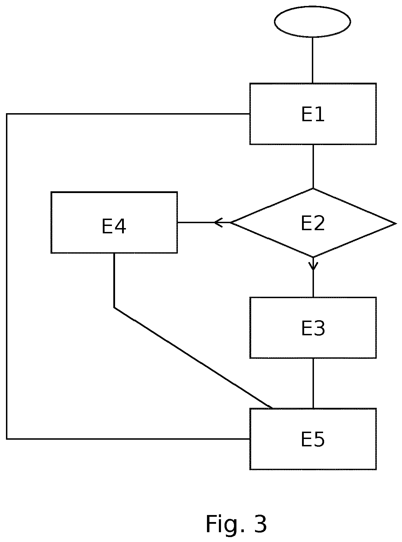

Le fonctionnement du contrôleur d'hybridation 14 est explicité ci-après en référence à l'algorithme de la figure 3.

Après une étape d'initialisation, une première étape E1 consiste à acquérir les différents signaux d'entrée à disposition du contrôleur d'hybridation 14. Dans cet exemple, il s'agit du signal 8 représentatif de la puissance à fournir au réseau électrique (dans cet exemple, la fréquence du réseau électrique), la puissance fournie par la centrale 1, la puissance fournie par le système de stockage 2, l'état de charge du système de stockage 2 (le signal 9).

L'étape suivante E2 détermine si la fonction de réglage de fréquence (réglage primaire, dans cet exemple) impliquant le système de stockage 2 est bien actif. Si c'est le cas, le procédé passe à l'étape suivante E3 et dans le cas contraire, le procédé passe à l'étape alternative E4.

En effet, l'utilisation du système de stockage 2 pour la fonction de réglage de fréquence peut être désactivée, par exemple en cas de maintenance du système de stockage 2. Ainsi, à l'étape E4, le système de stockage 2 étant désactivé, le contrôleur d'hybridation 14 va fournir par sa sortie 17, à l'entrée d'acquisition 16 du contrôleur de centrale 15, un signal qui est l'exacte reproduction du signal que le contrôleur d'hybridation 14 a reçu sur son entrée 19. Le contrôleur d'hybridation devient transparent et le contrôleur de centrale 15 reçoit sur son entrée 16 un signal qui correspond précisément au signal 8 (ici : la fréquence du réseau électrique 3). Dans ce mode de désactivation du système de stockage 2, le contrôleur d'hybridation 14 produit donc un signal de substitution 23 qui reproduit le signal 8.

Le groupe de production électrique fonctionne dans ce cas comme une centrale de production électrique sans hybridation participant au réglage primaire de fréquence, recevant directement sur son contrôleur de centrale 15 la fréquence du réseau électrique et n'agissant que sur les éléments de la centrale de production elle-même, et pas sur le système de stockage.

Suite à l'étape E4, l'étape E5 est une étape dans laquelle les consignes de commande sont produites.

Dans le cas de l'étape E5, qui succède à l'étape E4 (système de stockage 2 désactivé), seul le signal de substitution 23 à destination du contrôleur de centrale 15 est généré et correspond à la recopie directe du signal 8. La consigne 10 de puissance pour le système de stockage 2 est mise à zéro vis-à-vis du réglage primaire de fréquence. Cette consigne peut cependant ne pas être nulle lorsque le niveau de charge du système de stockage 2 devient très faible (perte d'énergie intrinsèque au système de stockage 2). En effet, un gestionnaire de rechargement peut être implémenté dans cette étape afin de maintenir le système de stockage 2 à son niveau de charge optimum, indépendamment du réglage primaire de fréquence.

De préférence, l'étape E5 détermine la valeur de l'écart entre la fréquence nominale du réseau électrique et la fréquence mesurée à cet instant (acquise sur l'entrée 19 du contrôleur d'hybridation 14). C'est cette valeur d'écart qui est ensuite passée au filtre passe bas (bloc 26 sur la figure 2) pour produire la composante basse fréquence 34 de cette différence de fréquences. Cette composante basse fréquence 34 (de la puissance dédiée au réglage en fréquence) sera ensuite combinée avec le signal 33 de gestion de charge issu du bloc 28 (gestion de la charge batterie), pour produire le signal de substitution 23. Dans le présent exemple, où c'est la valeur de la différence $\Delta F$ entre la fréquence et la fréquence du réseau qui est passée au filtre passe bas (bloc 26), la combinaison produisant le signal de substitution 23 comporte de plus la valeur de la fréquence nominale du réseau.

Alternativement, lorsque la fonction de réglage de fréquence est activée, le procédé détermine, à l'étape E3, au sein du contrôleur d'hybridation 14, les différentes commandes à produire pour piloter la centrale 1 et le système de stockage 2.

Ces commandes seront mises en oeuvre à l'étape E5, qui, dans ce cas, verra produire par le contrôleur d'hybridation 14, la consigne 10 de puissance pour le système de stockage 2, et le signal de substitution 23 à destination du contrôleur de centrale 15 de sorte à commander indirectement la puissance à produire par la centrale 1.

Le procédé reboucle ensuite sur l'étape E1.

Dans le cadre de la mise en oeuvre de l'invention pour un réglage primaire de fréquence, le bouclage entre les étapes E1 et E5 peut être réalisé environ toutes les secondes, ce qui est compatible avec l'exigence d'une production de puissance en moins de trente secondes en réponse à un déséquilibre de la fréquence du réseau.

Dans le présent exemple illustratif, la centrale électrique 1 est une centrale hydroélectrique d'une puissance nominale aux alentours de 40 MW. Le système de stockage 2, constitué de batteries lithium-ion, a une capacité de stockage de 400 kW.h et une puissance de 650 kW.

Des mesures réalisées dans cette application montrent que l'invention permet d'améliorer les performances du réglage en fréquence d'un rapport 10. De plus, le système de stockage d'énergie par batterie mis en oeuvre dans le cadre de l'invention permet de diminuer les déplacements linéaires des actionneurs de la centrale de plus de 50 % et de diminuer de 70 % les changements de direction de ces actionneurs. Ceci permet de diminuer significativement l'utilisation et donc l'usure des pièces mécaniques de la centrale hydroélectrique.

Des variantes de réalisation peuvent être mises en oeuvre. Notamment, l'exemple décrit se réfère au réglage primaire de fréquence, étant entendu qu'il est applicable à tout type de réglage en fréquence (secondaire, tertiaire, ou relatif à d'autres règlementations), même avec des paramètres et des exigences différentes.

**Revendications**

1.  Procédé de commande d'une puissance fournie à un réseau électrique (3) présentant une fréquence nominale, par un groupe de production électrique comportant une centrale hydroélectrique (1) et un système de stockage d'énergie à batteries (2), ce procédé comportant des étapes :

    - d'acquisition d'un premier signal (8) représentatif de la puissance à fournir au réseau électrique (3) ;
    - d'acquisition d'un deuxième signal (9) représentatif de l'état de charge du système de stockage d'énergie à batteries (2) ;
    - de commande de la centrale hydroélectrique (1) et de commande du système de stockage d'énergie à batteries (2), de sorte à fournir une puissance au réseau électrique (2) en fonction du premier signal (8) et du deuxième signal (9) ;

    ce procédé étant **caractérisé en ce qu'**il comporte les étapes suivantes :

    - filtrage du premier signal (8) pour en extraire une composante basse fréquence (34) dont la fréquence est inférieure à un seuil prédéterminé ;
    - production de consignes (11) pour des organes de production (5, 6) de la centrale hydroélectrique (1), à partir de ladite composante basse fréquence (34) ;
    - détermination, à partir d'un modèle de la centrale hydroélectrique, d'une puissance théorique de stabilisation de la fréquence du réseau électrique par la centrale hydroélectrique, cette puissance théorique de stabilisation étant relative à la production de la seule centrale hydroélectrique (1) en vue d'une stabilisation de la fréquence du réseau électrique (3), lorsque lesdites consignes (11) pour des organes de production (5, 6) de la centrale hydroélectrique (1) sont mises en oeuvre ;
    - détermination, à partir du premier signal (8), d'une puissance totale attendue de stabilisation de la fréquence du réseau électrique ;
    - production d'une consigne (10) de puissance pour le système de stockage d'énergie à batteries (2), à partir de la différence entre ladite puissance totale attendue de stabilisation de la fréquence du réseau électrique et ladite puissance théorique de stabilisation.

2.  Procédé selon l'une des revendications précédentes, **caractérisé en ce que** ledit modèle de la centrale hydroélectrique comporte au moins une pluralité de consignes de puissance mises en rapport avec le temps de réponse correspondant, nécessaire à la centrale hydroélectrique (1) pour atteindre la puissance correspondant à la consigne.

3.  Procédé selon l'une des revendications précédentes, **caractérisé en ce que** ledit modèle de la centrale hydroélectrique est conforme à une équation mettant en relation ladite puissance théorique de stabilisation avec : un signal représentatif de la production de consignes (11) pour des organes de production (5, 6) de la centrale hydroélectrique (1) ; un gain relatif au rapport entre la puissance produite par la centrale hydroélectrique (1) et la puissance totale attendue de stabilisation de la fréquence du réseau électrique ; et une constante de temps de réponse en puissance, relative à la centrale hydroélectrique (1).

4.  Procédé selon l'une des revendications précédentes, **caractérisé en ce que**, à l'étape de détermination de ladite puissance théorique de stabilisation, ledit modèle de la centrale hydroélectrique est appliqué au moins à ladite composante basse fréquence (34).

5.  Procédé selon la revendication 4, caractérisé en ce ledit modèle de la centrale hydroélectrique est appliqué au moins à une combinaison de ladite composante basse fréquence (34) et d'un signal (33) relatif à la gestion de charge du système de stockage d'énergie à batteries (2).

6.  Procédé selon la revendication 5, **caractérisé en ce que** le signal (33) relatif à la gestion de charge du système de stockage d'énergie à batteries (2) est relatif à un paramètre (29) d'état de charge cible du système de stockage d'énergie à batteries (2).

7.  Procédé selon l'une des revendications précédentes, **caractérisé en ce que** le premier signal (8) est la fréquence du réseau électrique (3).

**8.** Procédé selon la revendication 7, **caractérisé en ce que** l'étape de filtrage comporte une opération de détermination de la différence entre la fréquence du réseau électrique et sa fréquence nominale.

**9.** Procédé selon la revendication 8, **caractérisé en ce que**, à l'étape de filtrage, c'est un signal constitué de l'acquisition en continu de ladite différence entre la fréquence du réseau électrique et sa fréquence nominale, qui est filtré pour en extraire la composante basse fréquence (34).

**10.** Procédé selon la revendication 9, **caractérisé en ce que** ledit modèle de la centrale hydroélectrique est appliqué à un signal combinant au moins la valeur de la fréquence nominale du réseau électrique à ladite composante basse fréquence (34).

**11.** Procédé selon l'une des revendications précédentes, **caractérisé en ce que** l'étape de filtrage est réalisée par un filtre passe bas du premier ordre.

**12.** Procédé selon l'une des revendications précédentes, **caractérisé en ce que** l'étape de filtrage est réalisée par un filtre passe bas dont la fréquence de coupure correspond audit seuil prédéterminé de fréquence.

**13.** Procédé selon l'une des revendications 11 ou 12, **caractérisé en ce que** le filtre passe bas présente un gain sensiblement égal à 1.

**14.** Procédé selon l'une des revendications 11 à 13, **caractérisé en ce que** le filtre passe bas présente une constante de temps correspondant environ à un tiers de la constante de temps de la centrale hydroélectrique (1).

**15.** Procédé selon l'une des revendications précédentes, **caractérisé en ce que** la puissance totale attendue de stabilisation de la fréquence du réseau électrique est déterminée par un coefficient contractuel $K_{FCR}$ multiplié par la différence entre la fréquence du réseau électrique et sa fréquence nominale.

Fig. 1

Fig. 2

Fig. 3

Europäisches
Patentamt

European
Patent Office

Office européen
des brevets

## RAPPORT DE RECHERCHE EUROPEENNE

**Numéro de la demande**

**EP 22 21 6647**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 3 011 885 A1 (E ON FRANCE MAN [FR]) 17 avril 2015 (2015-04-17) | 1 | INV. H02J3/32 |
| A | * le document en entier * ----- | 2-15 | H02J3/38 H02J3/46 |
| A | US 2012/119579 A1 (JIN CHUNLIAN [US] ET AL) 17 mai 2012 (2012-05-17) * le document en entier * ----- | 1-15 | |
| A | US 2016/218551 A1 (SANO YUKO [JP] ET AL) 28 juillet 2016 (2016-07-28) * le document en entier * ----- | 1-15 | |
| A | US 2014/312689 A1 (MARKOWZ GEORG [DE] ET AL) 23 octobre 2014 (2014-10-23) * le document en entier * ----- | 1-15 | |

**DOMAINES TECHNIQUES RECHERCHES (IPC)**

H02J

Le présent rapport a été établi pour toutes les revendications

| Lieu de la recherche | Date d'achèvement de la recherche | Examinateur |
|---|---|---|
| Munich | 7 février 2023 | Hunckler, José |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 22 21 6647

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-02-2023

| Document brevet cité au rapport de recherche | | | Date de publication | Membre(s) de la famille de brevet(s) | | Date de publication |
|---|---|---|---|---|---|---|
| FR 3011885 | A1 | | 17-04-2015 | AUCUN | | |
| US 2012119579 | A1 | | 17-05-2012 | CA | 2814112 A1 | 24-05-2012 |
| | | | | US | 2012119579 A1 | 17-05-2012 |
| | | | | WO | 2012067944 A2 | 24-05-2012 |
| US 2016218551 | A1 | | 28-07-2016 | JP | 6480198 B2 | 06-03-2019 |
| | | | | JP | 2016140182 A | 04-08-2016 |
| | | | | US | 2016218551 A1 | 28-07-2016 |
| US 2014312689 | A1 | | 23-10-2014 | DE | 102011055231 A1 | 16-05-2013 |
| | | | | EP | 2777124 A1 | 17-09-2014 |
| | | | | US | 2014312689 A1 | 23-10-2014 |
| | | | | WO | 2013068263 A1 | 16-05-2013 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2721710 A